# FASCICULE DE BREVET EUROPEEN

(11) **EP 0 908 338 B1**
(45) Date de publication et mention de la délivrance du brevet: **26.03.2003**
(21) Numéro de dépôt: 98118845.1
(22) Date de dépôt: 06.10.1998
(51) Int. Cl.: B60H 1/00

(54) **Dispositif de commande d'installation de climatisation d'un véhicule automobile,à réglages personnalisés**
Steueranordnung einer Kraftfahrzeug-Klimaanlage, mit fahrerspezifischen Einstellungen
Control device for motor vehicle air conditioning, with driver preferences settings

(30) Priorité: 09.10.1997 FR 9712611
(43) Date de publication de la demande: 14.04.1999
(73) Titulaire: VALEO CLIMATISATION, 78321 La Verrière (FR)
(72) Inventeur: Gach, Béatrice, 78960 Voisins Le Bretonneux (FR)

(56) Documents cités:
- EP-A- 0 770 524
- EP-A- 0 781 672
- DE-A- 3 817 495
- US-A- 4 358 050
- US-A- 4 448 035

## Description

L'invention concerne les dispositifs de commande électronique d'installation de climatisation de véhicule automobile, notamment à mode de fonctionnement automatique.

Elle concerne plus particulièrement les dispositifs, du type comprenant :
- des moyens permettant de détecter des jeux de paramètres physiques, parmi lesquels au moins des températures à l'intérieur et à l'extérieur de l'habitacle (mais il pourra également s'agir du rayonnement solaire),
- des moyens de saisie permettant à un passager de requérir le placement de l'installation dans un mode de fonctionnement automatique et de sélectionner des jeux de paramètres aérothermiques de consigne à l'intérieur de l'habitacle, comme par exemple la température interne,
- un module de calcul capable de déterminer, à partir d'un jeu de paramètres physiques détectés et d'un jeu de paramètres de consigne, un jeu de réglages de l'installation, dits "en cours", et
- une interface-installation pour instaurer un tel jeu de réglages.

On entend par réglages en cours, l'ensemble des réglages permettant à l'installation de fonctionner à un instant donné. De tels réglages sont recalculés périodiquement, généralement après chaque réception d'un jeu de paramètres physiques détectés.

Les véhicules automobiles équipés de ce type d'installation de climatisation à mode de fonctionnement automatique sont fréquemment conduits par plusieurs personnes qui ne réagissent pas de la même façon dans un environnement aérothermique donné. Ces personnes (conducteurs) auront donc chacune des préférences particulières en matière d'aérothermie dans l'habitacle, auxquelles correspondront des paramètres aérothermiques de consigne qui seront presque toujours les mêmes pour un conducteur donné, mais souvent différents d'un conducteur à l'autre.

Or, lorsque l'on arrête le moteur d'un véhicule ou lorsque l'on met hors de fonctionnement son installation de climatisation, les réglages qui étaient en cours avant l'arrêt sont automatiquement rétablis lors de l'utilisation suivante, du fait de leur mémorisation automatique. Il en résulte qu'en cas de changement de conducteur, les réglages de l'installation qui sont automatiquement instaurés ne conviennent généralement pas au nouveau conducteur, qui doit alors saisir les paramètres de consigne qui lui conviennent.

Un but de l'invention est donc de procurer un dispositif de commande d'une installation de climatisation qui permet de remédier à l'inconvénient précité (voir aussi EP-A-0 781 672).

L'invention propose à cet effet un dispositif du type décrit en introduction, dans lequel on prévoit, une mémoire de programmation pour stocker au moins deux jeux de paramètres de consigne, dits personnalisés, en correspondance chacun d'une donnée dite "d'entrée", et des moyens de reconnaissance capables, à réception d'une donnée d'entrée fournie par un passager du véhicule, de fournir au module de calcul le jeu de paramètres de consigne stocké dans la mémoire de programmation en correspondance de la donnée d'entrée reçue. Ainsi, le module de calcul peut déterminer le jeu de réglages de l'installation qui correspondant au jeu de paramètres de consigne fourni par le module de reconnaissance et au jeu de paramètres physiques détectés en cours de façon à satisfaire les besoins habituels, personnalisés, de l'utilisateur.

De la sorte, les différents (au moins deux) passagers-utilisateurs (de préférence conducteurs) disposent chacun de leur propre jeu de paramètres de consigne personnalisés et peuvent l'utiliser quand ils le désirent, moyennant la fourniture d'une donnée d'entrée. Bien entendu, dans certaines conditions, un unique utilisateur peut également stocker pour son propre usage plusieurs (au moins deux) jeux personnalisés différents, mais ceux-ci devront tous être associés à des données d'entrée différentes.

Préférentiellement, les jeux de paramètres aérothermiques de consigne qui peuvent être saisis comprennent au moins la température. Mais, selon les options d'autres paramètres aérothermiques de consigne pourront faire l'objet de saisie, comme par exemple le mode de distribution d'air climatisé à l'intérieur de l'habitacle.

Les moyens de reconnaissance pourront être réalisés sous diverses formes. Ils pourront comprendre par exemple, et de préférence, un ou plusieurs organe(s) de saisie-identification de type touche de contact, ou bien comprendre un module de détection de fréquences vocales, ou bien encore comprendre un module de détection de codes ou de formes de clé.

Ainsi, dans le cas d'un unique organe de saisie-identification, du type, par exemple, à émission d'impulsion par pression (ou plus généralement actionnement), on peut accéder aux différents jeux de paramètres de consigne personnalisés stockés par pressions (ou actionnements) successives, le nombre de pressions formant la donnée d'entrée.

Dans le cas de plusieurs organes de saisie, il suffira d'actionner (par exemple presser) l'un de ces organes pour instaurer directement le jeu de paramètres de consigne personnalisés stocké correspondant, le seul actionnement de l'organe formant la donnée d'entrée.

Dans le cas d'un module de détection de fréquences vocales, il suffira, par exemple, à un passager dont la fréquence vocale est mémorisée d'émettre (vocalement) un message choisi pour que le jeu de paramètres de consigne personnalisés stocké correspondant à sa fréquence vocale soit automatiquement instauré, ladite fréquence vocale formant la donnée d'entrée.

Dans le cas d'un module de détection de codes de type alphanumérique, il suffira, par exemple, à un passager dont le code est mémorisé de fournir ledit code pour que le jeu de paramètres de consigne personnalisés stocké correspondant à son code soit automatiquement instauré, ledit code formant la donnée d'entrée.

Dans le cas d'un module de détection de formes de clés, il suffira, par exemple, à un passager d'introduire sa clé dans le contacteur du véhicule pour que le jeu de paramètres de consigne personnalisés stocké correspondant à la forme de sa clé soit automatiquement instauré, ladite forme formant la donnée d'entrée.

Dans un premier mode de réalisation de l'invention, quel que soit les moyens de reconnaissance utilisés, et par conséquent quel que soit le type de donnée d'entrée, une fois choisi l'un jeu de paramètres de consigne stocké, toute saisie-modification de l'un au moins des paramètres aérothermiques de consigne, entraîne le remplacement automatique dans ce jeu de paramètres de consigne choisi du(s)dit(s) paramètre(s) aérothermique(s) ayant fait l'objet de la saisie-modification.

Cela permet d'adapter en temps réel les paramètres de consigne initialement choisis aux variations aérothermiques locales engendrées par des modifications des paramètres physiques à l'intérieur et/ou à l'extérieur de l'habitacle. Cela peut être le cas, par exemple, lorsque les conditions climatiques changent brusquement, ou bien lorsque l'on pénètre dans un tunnel.

Dans un second mode de réalisation de l'invention, et toujours quel que soit les moyens de reconnaissance utilisés, on pourra prévoir des moyens de validation pour permettre, après reconnaissance d'une donnée d'entrée désignant un jeu de paramètres personnalisés suivie d'une saisie-modification de l'un au moins des paramètres aérothermiques de consigne, le remplacement dans le jeu de paramètres stocké désigné du (ou des) paramètre(s) aérothermique(s) ayant fait l'objet de la modification-saisie.

Ces moyens de validation pourront comprendre une touche de validation destinée, en cas d'actionnement, à provoquer le remplacement, ou bien des moyens de temporisation agencés pour décompter une période temporelle choisie à chaque saisie-modification d'un paramètre de consigne, et agencés pour autoriser le remplacement si aucune autre saisie-modification n'est effectuée durant la période choisie.

On pourra également prévoir dans la mémoire de programmation, lors de l'assemblage du véhicule, et cela quel que soit le type de module de reconnaissance utilisé, des jeux de paramètres de consigne dits "par défaut", en nombre égal au nombre de jeux de paramètres de consigne pouvant être stockés dans la mémoire de programmation.

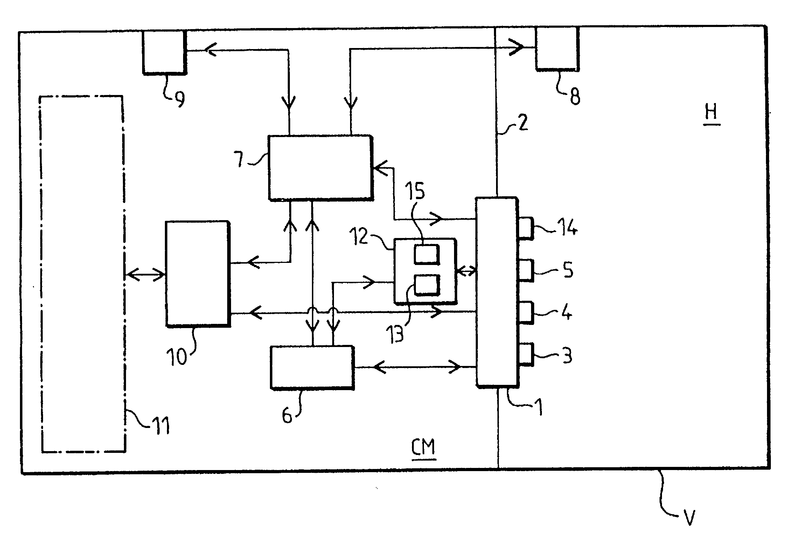

Dans la description qui suit, faite à titre d'exemple, on se réfère à l'unique dessin annexé qui illustre schématiquement un dispositif de commande d'une installation de climatisation selon l'invention.

Une telle installation de climatisation étant parfaitement connue de l'homme de l'art, il est donc inutile d'en décrire tous les éléments, ainsi que leur fonctionnement. Il est néanmoins utile, pour la suite de la description, de préciser qu'elle est gérée par un dispositif de commande comprenant au moins des organes de saisie, une interface-installation, un module de calcul de réglages et une mémoire, et qu'un passager logé dans l'habitacle H d'un véhicule V équipé d'une telle installation peut choisir, à l'aide de ces organes de saisie, la température interne TCint, ainsi que généralement le débit d'air climatisé et le mode de distribution d'air climatisé MD.

Pour ce faire, le véhicule V comprend un boîtier de saisie 1, généralement logé dans la planche de bord 2 du véhicule, et comportant une multiplicité d'organes de saisie, comme par exemple des boutons-pression à impulsions tels que des touches digitales. Dans l'exemple illustré sur l'unique figure, on prévoit notamment une première touche 3 permettant de saisir (choisir) la température à l'intérieur de l'habitacle (TCint) et une seconde touche digitale 4 permettant, par exemple, de saisir le mode de distribution d'air MD dans ce même habitacle. La température interne et le mode de distribution d'air sont appelés paramètres aérothermiques de consigne à l'intérieur de l'habitacle, ou de façon plus concise paramètres de consigne.

Dans l'exemple illustré, le boîtier de saisie 1 comprend également une touche de mise en fonctionnement de l'installation de climatisation 5.

Lorsqu'un utilisateur souhaite que certains paramètres aérothermiques de consigne (lesquels forment un jeu) soient instaurés dans l'habitacle, il actionne les organes de saisies 3, 4 correspondants. Ces paramètres sont alors stockés dans une mémoire 6, de sorte qu'en cas d'arrêt du moteur ou de l'installation les réglages associés puissent être réinstaurés lors de l'utilisation suivante de l'installation.

Ces paramètres aérothermiques de consigne choisis sont également adressés à un module de calcul 7 auquel sont connectés au moins deux capteurs de paramètres physiques, parmi lesquels au moins deux capteurs de température 8 et 9 destinés respectivement à mesurer la température à l'intérieur de l'habitacle (Tint) et la température à l'extérieur de ce même habitacle (Text). Ces paramètres physiques détectés forment un jeu. Les capteurs de température peuvent être complétés, par exemple, par un capteur de rayonnement solaire ou par tout autre capteur, connu de l'homme de l'art, permettant d'affiner les réglages de l'installation.

Connaissant le jeu de paramètres physiques détectés et le jeu de paramètres de consigne sélectionnés, le module de calcul peut déterminer, grâce à des automates programmés qu'il comprend, un jeu de réglages de l'installation permettant de satisfaire le plus rapidement possible le passager-utilisateur, lequel est de préférence le conducteur.

Le module de calcul 7 adresse alors à une interface-installation 10 le jeu de réglages ainsi déterminé, de sorte que les éléments réglables 11 de l'installation fonctionnent selon ces réglages particuliers.

Le dispositif de commande selon l'invention offre un mode de fonctionnement personnalisé, permettant, soit à plusieurs utilisateurs du véhicule de mémoriser chacun un jeu de paramètres de consigne personnalisés, soit à un unique utilisateur de mémoriser, par exemple dans une mémoire de programmation 15, qui peut être la même que la mémoire 6, plusieurs jeux de paramètres de consigne personnalisés différents.

Un passager-utilisateur souhaitant que son jeu de paramètres personnalisés, préalablement mémorisé, soit utilisé, n'a qu'à fournir (ou adresser) au dispositif de commande une donnée dite d'entrée pour que les réglages de l'installation correspondant soient instaurés.

Pour ce faire, l'invention prévoit un module de reconnaissance 12 capable de réceptionner les données d'entrée des utilisateurs, puis, après reconnaissance de celles-ci et interrogation de la mémoire de programmation 15 qui dans l'exemple illustré fait partie du module de reconnaissance 12, d'adresser au module de calcul 7 le jeu de paramètres de consigne personnalisés, stockés dans la mémoire de programmation 15, associé à la donnée d'entrée reçue, de sorte que le module de calcul détermine le jeu de réglages adapté au dernier jeu de paramètres physiques détectés, puis que l'interface-installation 10 instaure ce jeu de réglages.

Préférentiellement, le module de reconnaissance 12 comprend une mémoire auxiliaire 13 dans laquelle se trouvent mémorisées les différentes données d'entrée associées aux différents utilisateurs, ou aux différents jeux de paramètres de consigne d'un unique utilisateur. Ainsi, à réception de la donnée d'entrée fournie par l'utilisateur, le module de reconnaissance 12 n'a plus qu'à effectuer une comparaison entre cette donnée reçue et les données stockées dans la mémoire auxiliaire 13. Si cette comparaison indique qu'il y a identité entre la donnée d'entrée reçue et l'une des données stockées, il n'a plus qu'à aller chercher dans la mémoire de programmation 15 le jeu de paramètres de consigne personnalisés qui est stocké en correspondance de la donnée d'entrée reçue de façon à l'adresser au module de calcul 7.

Bien entendu, la mémoire auxiliaire 13 et la mémoire de programmation 15 peuvent ne constituer qu'une même mémoire, qui peut elle-même être une partie d'une mémoire comportant la mémoire 6. De même, comme cela est illustré sur la figure, le module de calcul, le module de reconnaissance, les différentes mémoires et éventuellement l'interface-utilisateur peuvent être intégrés dans un module électronique spécifique, comme par exemple un micro-contrôleur.

Plusieurs modes de réalisation peuvent être envisagés pour le module de reconnaissance 12.

Ainsi, comme cela est illustré sur l'unique figure, on peut prévoir dans le boîtier de saisie 1 un organe d'identification 14, par exemple une touche digitale, permettant à un passager-utilisateur, en cas d'actionnement, de fournir au module de reconnaissance 12 la donnée d'entrée désignant le jeu de paramètres de consigne personnalisés de l'utilisateur. Lorsque l'organe d'identification 14 est réalisé sous la forme d'une touche digitale, capable, par exemple d'émettre une impulsion, une première pression (ou actionnement) de la touche suffit au module de reconnaissance pour identifier un premier utilisateur. De même un double actionnement identifie un second utilisateur, un triple actionnement identifie un troisième utilisateur, etc.

Dans une variante de ce mode de réalisation, au lieu d'un unique organe d'identification 14, on peut prévoir une multiplicité d'organes d'identification permettant respectivement d'identifier les utilisateurs, ou bien les jeux de paramètres de consigne personnalisés différents d'un unique utilisateur.

Ainsi, lorsque le module de reconnaissance 12 reçoit, par exemple, deux impulsions, il leur associe l'utilisateur numéro 2. Il n'a plus qu'à aller chercher dans la mémoire de programmation 15 le jeu de paramètres de consigne associé et à l'adresser au module de calcul 7.

D'autres modes de réalisation peuvent être envisagés pour le module de reconnaissance 12. Ainsi, il pourra être réalisé sous la forme d'un module de synthèse vocale capable, par exemple, de reconnaître plusieurs fréquences vocales. Dans un tel mode de réalisation, il est clair que l'on doit prévoir une phase d'enregistrement, par exemple d'un message particulier pour chaque utilisateur, de sorte que ledit module de reconnaissance 12 puisse mémoriser dans la mémoire auxiliaire 13 les différentes fréquences vocales de chaque utilisateur sous forme de message vocal.

Ainsi, il suffit à un utilisateur dont la fréquence vocale est mémorisée dans la mémoire auxiliaire 13, de prononcer le message, distinctement, pour que le module de reconnaissance 12, d'une part, identifie, par comparaison, sa fréquence vocale à l'une de celles qui se trouvent mémorisées dans la mémoire auxiliaire 13, et d'autre part, détermine le jeu de paramètres de consigne personnalisés correspondant. Dans ce mode de réalisation le message vocal forme la donnée d'entrée.

Dans un autre mode de réalisation, le module de reconnaissance 12 peut comporter des organes de saisie permettant à un passager-utilisateur de composer un code personnel alphanumérique formant la donnée d'entrée, auquel correspond un jeu de paramètres de consigne personnalisés mémorisé dans la mémoire de programmation 15. Il est clair, que tout comme dans le mode dit à synthèse vocale, une étape de mémorisation préalable des codes alphanumériques de chaque utilisateur doit être effectuée.

Dans ce mode de réalisation, on peut par exemple utiliser comme organes de saisie (lorsque le dispositif en est équipé), les touches digitales du démarreur électronique à codes du véhicule.

Ici, à réception du code confidentiel de l'utilisateur, le module de reconnaissance 12 effectue une comparaison avec les codes stockés dans sa mémoire auxiliaire 13, et en déduit, en cas d'identité, le jeu de paramètres de consigne correspondant au code saisi. Il est clair que dans cette variante chaque code-utilisateur doit permettre la mise en fonctionnement du véhicule.

Dans encore un autre mode de réalisation, le module de reconnaissance 12 peut être réalisé sous la forme d'un module de reconnaissance de formes de clés de contact du véhicule. Ce mode de réalisation nécessite que les différentes clés de mise en fonctionnement du véhicule présentent des différences minimes détectables par le module de reconnaissance 12, par exemple grâce à des contacteurs implantés à l'intérieur du logement de clé de contact.

Ici, tout comme dans le premier mode de réalisation à saisie par touche, il n'est pas nécessaire d'enseigner un code ou un message particulier au module de reconnaissance 12. Le seul fait d'introduire la clé de contact dans son logement assure automatiquement la reconnaissance de la forme de la clé, laquelle forme constitue la donnée d'entrée. Cette reconnaissance peut s'effectuer grâce à un circuit à contacteurs raccordé au module de reconnaissance 12.

Dans tous ces modes de réalisation, on prévoit, de préférence, lors de l'assemblage du véhicule, un jeu de paramètres de consigne par défaut, pour chaque utilisateur potentiel. Ces jeux de paramètres de consigne par défaut pourront être identiques, ou bien différents.

Préférentiellement, il est possible de modifier chaque jeu de paramètres de consigne personnalisés stocké en actionnant l'une au moins des touches de saisie des paramètres aérothermiques de consigne. Pour ce faire, deux modes peuvent être envisagés.

Dans un premier mode de réalisation, lorsque les réglages en cours de l'installation correspondent à un jeu de paramètres de consigne personnalisés sélectionné, et que l'utilisateur modifie l'un des paramètres aérothermiques de consigne, le ou les paramètres de consigne modifiés viennent automatiquement remplacer le ou les anciens paramètres du jeu de paramètres de consigne personnalisé concerné.

Dans un second mode de réalisation, on peut prévoir un module de validation muni d'une touche de validation dont l'actionnement permet de remplacer dans un jeu de paramètres, stocké dans la mémoire de programmation 15, et préalablement choisi par un utilisateur reconnu, un ou plusieurs paramètres aérothermiques ayant fait l'objet d'une saisie-modification.

Dans une variante de ce second mode, le module de validation pourra comprendre un module de temporisation agencé pour décompter une période temporelle de durée choisie dès qu'une saisie-modification d'un paramètre de consigne est effectuée, et pour autoriser le remplacement dans un jeu de paramètres de consigne, stocké dans la mémoire de programmation 15, et préalablement choisi par un utilisateur reconnu, d'un ou plusieurs paramètres aérothermiques ayant fait l'objet d'une saisie-modification, si aucune autre saisie-modification n'est effectuée durant cette période choisie.

Mais, dans un mode de réalisation différent, on peut prévoir que la modification de l'un au moins des paramètres de consigne correspondant au jeu de paramètres de consigne personnalisés sélectionné, n'entraîne qu'une modification temporaire des réglages en cours, jusqu'à mise hors de fonctionnement de l'installation.

L'invention ne se limite pas aux modes de réalisation décrits ci-avant, mais elle englobe toutes les variantes que pourra développer l'homme de l'art dans le cadre des revendications ci-après.

Ainsi, le nombre de capteurs pourra être notablement supérieur à celui illustré sur la figure unique.

Par ailleurs, les organes de saisie de paramètres aérothermiques de consigne et de mise en fonctionnement de l'installation pourront être différents des touches digitales décrites ci-avant. Il pourra s'agir notamment de boutons rotatifs, ou bien de curseurs à déplacement linéaire.

Enfin, on a décrit des modes de fonctionnement dans lesquels on pouvait modifier deux paramètres aérothermiques de consigne, mais il est clair que l'invention s'applique tout aussi bien aux modes de fonctionnement dans lesquels on ne peut modifier qu'un seul paramètre ou bien plus de deux.

## Revendications

1. Dispositif de commande d'une installation de climatisation d'un véhicule automobile, du type comprenant :
- des moyens de détection (8,9) de jeux de paramètres physiques (Tint,Text),
- des moyens de saisie (3,4) permettant à un passager de sélectionner des jeux de paramètres aérothermiques de consigne à l'intérieur de l'habitacle (TCint),
- un module de calcul propre à déterminer, à partir d'un jeu de paramètres physiques détectés (Tint,Text) et d'un jeu de paramètres de consigne (TCint), un jeu de réglages de l'installation, et
- une interface-installation (10) pour instaurer un tel jeu de réglages,
**caractérisé en ce qu'**il comprend :
- une mémoire de programmation (15) propre à stocker au moins deux jeux de paramètres de consigne en correspondance chacun d'une donnée dite d'entrée, et
- des moyens de reconnaissance (12) propres, à réception d'une donnée d'entrée fournie par un passager du véhicule, à fournir au module de calcul (7) le jeu de paramètres de consigne stocké dans ladite mémoire de programmation en correspondance de la donnée d'entrée reçue, de sorte que l'installation fonctionne selon un jeu de réglages correspondant au jeu de paramètres de consigne fourni et au jeu de paramètres physiques détectés en cours (Tint,Text).

2. Dispositif selon la revendication 1, **caractérisé en ce que** les jeux de paramètres aérothermiques de consigne comprennent au moins la température (TCint) à l'intérieur de l'habitacle (H).

3. Dispositif selon la revendication 2, **caractérisé en ce que** les jeux de paramètres aérothermiques de consigne comprennent au moins la température (TCint) et le mode de distribution d'air (MD) à l'intérieur de l'habitacle (H).

4. Dispositif selon l'une des revendications 1 à 3, **caractérisé en ce que** les moyens de reconnaissance (12) comprennent au moins un organe de saisie-identification (14), de type touche de contact, propre à être actionné par un passager souhaitant obtenir dans l'habitacle l'un des jeux de paramètres de consigne mémorisés dans la mémoire de programmation (15), ledit actionnement formant donnée d'entrée.

5. Dispositif selon la revendication 4, **caractérisé en ce que** l'organe de saisie (14) est du type à émission d'impulsion par pression, chaque jeu de paramètres personnalisés correspondant à un nombre de pressions successives prédéfinies.

6. Dispositif selon la revendication 4, **caractérisé en ce que** les moyens de reconnaissance (12) comprennent une multiplicité d'organes de saisie-identification personnalisés, de type touche de contact, associés chacun à un jeu de paramètres personnalisés et propres à être actionnés par un passager souhaitant obtenir dans l'habitacle l'un des jeux de paramètres de consigne stockés, ledit actionnement formant donnée d'entrée.

7. Dispositif selon l'une des revendications 1 à 3, **caractérisé en ce que** les moyens de reconnaissance (12) comprennent un module de détection propre à reconnaître plusieurs formes de clés différentes associées chacune à un jeu de paramètres stocké, lesdites formes formant message d'entrée.

8. Dispositif selon l'une des revendications 1 et 2, **caractérisé en ce que** les moyens de reconnaissance (12) comprennent un module de détection de fréquences vocales propre à mémoriser un message vocal selon au moins deux fréquences vocales différentes de passagers, associées chacune à un jeu de paramètres de consigne stocké, et à comparer audit message vocal stocké tout message vocal détecté de façon à déterminer si ledit message détecté a été émis selon l'une des fréquences vocales mémorisées et est identique audit message stocké, un tel message vocal détecté formant donnée d'entrée.

9. Dispositif selon l'une des revendications 1 à 3, **caractérisé en ce que** les moyens de reconnaissance (12) comprennent un module de détection de codes comprenant des organes de saisie pour permettre la mémorisation d'au moins deux codes différents, associés chacun à un jeu de paramètres stocké, et la saisie par un passager d'un code personnel, et déterminer si ledit code saisi est identique à l'un desdits codes stockés, un tel code saisi formant message d'entrée.

10. Dispositif selon l'une des revendications 4 à 9, **caractérisé en ce qu'**il est agencé pour, en cas de reconnaissance d'une donnée d'entrée désignant un jeu de paramètres stocké suivie d'une saisie-modification de l'un au moins des paramètres aérothermiques de consigne, remplacer dans ledit jeu de paramètres stocké désigné le(s)dit(s) paramètre(s) aérothermique(s) ayant fait l'objet de la modification-saisie.

11. Dispositif selon l'une des revendications 4 à 9, **caractérisé en ce qu'**il comprend des moyens de validation pour permettre, après reconnaissance d'une donnée d'entrée désignant un jeu de paramètres personnalisés suivie d'une saisie-modification de l'un au moins des paramètres aérothermiques de consigne, le remplacement dans ledit jeu de paramètres stocké désigné dudit (ou desdits) paramètre(s) aérothermique(s) ayant fait l'objet de la modification-saisie.

12. Dispositif selon la revendication 11, **caractérisé en ce que** les moyens de validation comprennent une touche de validation destiné, en cas d'actionnement, à provoquer ledit remplacement.

13. Dispositif selon la revendication 11, **caractérisé en ce que** les moyens de validation comprennent des moyens de temporisation agencés pour décompter une période temporelle choisie à chaque saisie-modification d'un paramètre de consigne, et propres à autoriser ledit remplacement si aucune autre saisie-modification n'est effectuée durant ladite période choisie.

14. Dispositif selon l'une des revendications précédentes, **caractérisé en ce qu'**avant une première mise en fonctionnement de l'installation, la mémoire de programmation (15) stocke des jeux de réglages dits "par défaut", en nombre égal au nombre de jeux de consigne pouvant être stockés, et destinés à être remplacés respectivement par des jeux de paramètres de consigne choisis sélectivement par le(s) passager(s).

## Claims

1. Apparatus for controlling an air conditioning installation for a motor vehicle, of the type comprising:
- means (8, 9) for detecting ranges of physical parameters (Tint, Text),
- setting means (3, 4) for enabling a passenger to select ranges of demand parameters (TCint) for the atmosphere inside the cabin,
- a computer module adapted to determine, from a set of detected physical parameters (Tint, Text) and from a set of demand parameters (Tcint), a set of adjustments for the installation, and
- an installation interface (10) for establishing a said set of adjustments,
**characterised in that** it comprises:
- a programming memory (15) adapted to store at least two sets of demand parameters, each corresponding to a so-called input data item, and
- recognition means (12) so adapted as, on receipt of an input data item provided by a passenger in the vehicle, to supply to the computer module (7) the set of demand parameters stored in the said programming memory and corresponding to the input data item received, whereby the installation operates in accordance with a set of adjustments corresponding to the set of demand parameters supplied, and to the current set of detected physical parameters (Tint, Text).

2. Apparatus according to Claim 1, **characterised in that** the sets of atmospheric demand parameters include at least the temperature (Tcint) in the cabin (H).

3. Apparatus according to Claim 2, **characterised in that** the sets of atmospheric demand parameters include at least the temperature (Tcint) and the air distribution mode (MD) within the cabin (H).

4. Apparatus according to one of Claims 1 to 3, **characterised in that** the recognition means (12) comprise at least one identification setting device (14) of the touch contact type, arranged to be actuated by a passenger who desires to obtain in the cabin one of the sets of demand parameters memorised in the programming memory (15), the said actuation constituting an input data item.

5. Apparatus according to Claim 4, **characterised in that** the setting device (14) is of the type that emits impulses in response to pressure, with each set of personalised parameters corresponding to a number of successive predefined pressures.

6. Apparatus according to Claim 4, **characterised in that** the recognition means (12) comprise a multiplicity of personalised identification-setting devices, of the touch contact type, each associated with a range of personalised parameters and adapted to be actuated by a passenger desirous of obtaining in the cabin one of the stored ranges of demand parameters, the said actuation constituting an input data item.

7. Apparatus according to one of Claims 1 to 3, **characterised in that** the recognition means (12) include a detection module adapted to recognise a plurality of forms of different keys, each associated with a range of stored parameters, the said forms constituting an input message.

8. Apparatus according to Claim 1 or Claim 2, **characterised in that** the recognition means (12) comprise a voice frequency detection module adapted to memorise a voice message in at least two different passengers' voice frequencies, each associated with a stored range of demand parameters, and to compare any voice message detected with the said stored voice message, whereby to determine whether the said detected message was emitted at one of the memorised voice frequencies and is identical with the said stored message, such a detected voice message constituting an input data item.

9. Apparatus according to one of Claims 1 to 3,
**characterised in that** the recognition means (12) include a code detecting module comprising setting devices for permitting memorisation of at least two different codes, each associated with a stored range of parameters, and setting of a personal code by a passenger, and for determining whether the said code as set is identical with one of the said stored codes, such a code as set constituting an input message.

10. Apparatus according to one of Claims 4 to 9, **characterised in that** it is so arranged that, in the event of recognition of an input data item designating a stored set of parameters followed by a modification setting for at least one of the demand atmospheric parameters, it replaces in the said designated stored set of parameters the said atmospheric parameter or parameters to which the setting modification is directed.

11. Apparatus according to one of Claims 4 to 9, **characterised in that** it includes validation means for permitting, after recognition of an input data item designating a set of personalised parameters followed by a modification setting of at least one of the demand atmospheric parameters, the replacement, in the said designated set of stored parameters, of the said atmospheric parameter or parameters to which the setting modification is directed.

12. Apparatus according to Claim 11, **characterised in that** the validation means comprise a validation touch button adapted so that, when actuated, it causes the said replacement to be effected.

13. Apparatus according to Claim 11, **characterised in that** the validation means include timing means arranged to count down a time period selected for each modification setting of a demand parameter, and adapted to authorise the said replacement if no other modification setting has been effected during the said time period.

14. Apparatus according to one of the preceding Claims, **characterised in that**, before the installation is brought into operation for a first time, the programming memory (15) stores sets of so-called "default" adjustments in a number equal to the number of demand sets that can be stored, and arranged to be replaced respectively by sets of demand parameters chosen selectively by the passenger or passengers.

## Patentansprüche

1. Steuervorrichtung für eine Kraftfahrzeug-Klimaanlage, vom Typ, umfassend:
- eine Erfassungseinrichtung (8, 9) zur Erfassung von Sätzen an physikalischen Parametern (Tint, Text),
- eine Eingabeeinrichtung (3, 4), die es einem Insassen ermöglicht, Sätze an aerothermischen Sollparametern im Inneren des Innenraumes (TCint) auszuwählen,
- ein Berechnungsmodul, welches, ausgehend von einem erfassten Satz an physikalischen Parametern (Tint, Text) und einem Satz an Sollparametern (TCint), einen Satz an Regelungen oder Einstellungen der Anlage bestimmen kann, und
- eine Anlagenschnittstelle (10), um einen solchen Satz an Einstellungen zu bewirken,
**dadurch gekennzeichnet, dass** die Vorrichtung umfasst:
- einen Programmierspeicher (15), vorgesehen zum Speichern von zumindest zwei Sätzen an Sollparametern entsprechend jeweils sogenannten Eingangsoder Eintrittsdaten, und
- eine Erkennungseinrichtung (12), die beim Empfang von durch einen Insassen des Fahrzeugs bereitgestellten Eingangsdaten dem Berechnungsmodul (7) den Satz an Sollparametem bereitstellen kann, der in dem Programmierspeicher gespeichert ist, und zwar in Entsprechung der empfangenen Eingangsdaten, so dass die Anlage betrieben wird gemäß einem Satz an Einstellungen, entsprechend dem Satz an bereitgestellten Sollparametem und dem aktuell erfassten Satz an physikalischen Parametern (Tint, Text).

2. Vorrichtung nach Anspruch 1, **dadurch gekennzeichnet, dass** die Sätze an aerothermischen Sollparametern zumindest die Temperatur (TCint) im Inneren des Innenraumes (H) umfassen.

3. Vorrichtung nach Anspruch 2, **dadurch gekennzeichnet, dass** die Sätze an aerothermischen Sollparametern zumindest die Temperatur (TCint) und den Luftverteilungsmodus (MD) im Inneren des Innenraumes (H) umfassen.

4. Vorrichtung nach einem der Ansprüche 1 bis 3, **dadurch gekennzeichnet, dass** die Erkennungseinrichtung (12) zumindest eine Eingabe-Identifikationseinrichtung (14) vom Tastschalter- oder Berührungsschaltertyp umfasst, betätigbar durch einen Insassen, der in dem Innenraum einen der Sollparametersätze wünscht, die in dem Programmierspeicher (15) gespeichert sind, wobei die Betätigung Eingangsdaten bereitstellt.

5. Vorrichtung nach Anspruch 4, **dadurch gekennzeichnet, dass** die Eingabeeinrichtung (14) vom Typ Impulsemission durch Druck ist, wobei jeder Satz an personalisierten Parametern eine Anzahl an sukzessiven, vordefinierten Druckbeaufschlagungen entspricht.

6. Vorrichtung nach Anspruch 4, **dadurch gekennzeichnet, dass** die Erkennungseinrichtung (12) eine Vielzahl von personalisierten Eingabe-Identifikationseinrichtungen vom Berührungsschaltertyp umfasst, jeweils zugeordnet einem Satz von personalisierten Parametern und betätigbar durch einen Insassen, der in dem Innenraum einen der gespeicherten Sollparametersätze wünscht, wobei die Betätigung Eingangsdaten bereitstellt.

7. Vorrichtung nach einem der Ansprüche 1 bis 3, **dadurch gekennzeichnet, dass** die Erkennungseinrichtung (12) ein Erfassungsmodul umfasst, welches in der Lage ist, mehrere unterschiedliche Schlüsselformen zu erkennen, jeweils zugeordnet zu einem gespeicherten Parametersatz, wobei die Formen Eingangsnachrichten ausbilden.

8. Vorrichtung nach einem der Ansprüche 1 und 2, **dadurch gekennzeichnet, dass** die Erkennungseinrichtung (12) ein Sprachfrequenzerfassungsmodul umfasst, welches eine Sprachnachricht speichern kann, entsprechend zumindest zwei unterschiedlichen Insassen-Sprach- oder -Vokalfrequenzen, zugeordnet jeweils einem Satz an gespeicherten Sollparametern und fähig, jegliche erfasste Sprachnachricht mit der gespeicherten Sprach- oder Vokalnachricht zu vergleichen, um somit zu bestimmen, ob die erfasste Nachricht emittiert wurde gemäß einer der gespeicherten Sprachfrequenzen und identisch ist zu der gespeicherten Nachricht, wobei eine solche erfasste Sprachnachricht Eingangsdaten darstellt.

9. Vorrichtung nach einem der Ansprüche 1 bis 3, **dadurch gekennzeichnet, dass** die Erkennungseinrichtung (12) ein Erfassungsmodul für Codes umfasst, umfassend eine Eingabeeinrichtung, um die Speicherung von zumindest zwei unterschiedlichen Codes zu ermöglichen, jeweils zugeordnet einem Satz an gespeicherten Parametern, sowie die Eingabe durch einen Insassen eines persönlichen Codes, und welche in der Lage ist zu bestimmen, ob der eingegebene Code identisch ist zu einem der gespeicherten Codes, wobei solch ein eingegebener Code eine Eingangsnachricht ausbildet.

10. Vorrichtung nach einem der Ansprüche 4 bis 9, **dadurch gekennzeichnet, dass** sie ausgebildet ist, um im Falle des Erkennens von Eingangsdaten, die einen Satz an gespeicherten Parametern beziffern, gefolgt von einer Modifikationseingabe von zumindest einem der aerothermischen Sollparameter, in dem gespeicherten Satz an Parametern den oder die bestimmte(n) aerothermische(n) Parameter zu ersetzen, der oder die Gegenstand der Modifikationseingabe ist bzw. war.

11. Vorrichtung nach einem der Ansprüche 4 bis 9, **dadurch gekennzeichnet, dass** sie eine Bestätigungseinrichtung umfasst, um nach Erkennung von Eingangsdaten, einen Satz von personalisierten Parametern bestimmend, gefolgt von einer Veränderungs- oder Modifikationseingabe von zumindest einem der aerothermischen Sollparameter, die Ersetzung in dem bestimmten Satz an gespeicherten Parametern von dem oder den aerothermischen Parameter(n) zu ermöglichen der bzw. die Gegenstand der Modifikations- oder Veränderungseingabe ist bzw. sind.

12. Vorrichtung nach Anspruch 11, **dadurch gekennzeichnet, dass** die Bestätigungseinrichtung eine Bestätigungstaste umfasst, bestimmt, um im Falle einer Betätigung die Ersetzung zu veranlassen.

13. Vorrichtung nach Anspruch 11, **dadurch gekennzeichnet, dass** die Bestätigungseinrichtung eine Zeitgebungseinrichtung umfasst, ausgebildet zum Herunterzählen einer gewählten Zeitperiode bei jeder Modifikationseingabe eines Sollparameters und vorgesehen, um die Ersetzung zu erlauben, wenn keine andere Veränderungseingabe während der gewählten Zeitperiode durchgefuhrt wird.

14. Vorrichtung nach einem der vorangegangenen Ansprüche, **dadurch gekennzeichnet, dass** vor einer ersten Inbetriebnahme der Anlage der Programmierspeicher (15) sogenannte Defold-Einstellsätze speichert, und zwar bei einer Anzahl gleich zu der Anzahl an Sollwertsätzen, die speicherbar sind, wobei diese vorgesehen sind, jeweils ersetzt zu werden durch selektiv von dem oder den Insassen gewählten Sollparametersätzen.
